# EUROPEAN PATENT SPECIFICATION

(11) **EP 3 438 804 B1**
(45) Date of publication and mention of the grant of the patent: **27.01.2021**
(21) Application number: 17184111.7
(22) Date of filing: 31.07.2017
(51) Int. Cl.: G06F 3/046, G06F 3/0354

(54) **AN INPUT DEVICE, A METHOD OF OPERATING AN INPUT DEVICE AND A SYSTEM COMPRISING AN INPUT DEVICE**
EINGABEVORRICHTUNG, VERFAHREN ZUM BETRIEB EINER EINGABEVORRICHTUNG UND SYSTEM WELCHES EINE EINGABEVORRICHTUNG BEINHALTET
DISPOSITIF D'ENTRÉE, PROCÉDÉ DE FONCTIONNEMENT DE DISPOSITIF D'ENTRÉE ET SYSTÈME COMPRENANT UN DISPOSITIF D'ENTRÉE

(43) Date of publication of application: 06.02.2019
(73) Proprietor: Vestel Elektronik Sanayi ve Ticaret A.S., 45030 Manisa (TR)
(72) Inventor: SARIARSLAN, Muhammet Kürsat, 45030 Manisa (TR)
(74) Representative: Flint, Adam

(56) References cited:
- EP-A1- 3 026 927
- WO-A1-2012/075468
- US-A1- 2014 207 407

## Description

### Technical Field

The present disclosure relates to an input device and a method of operating an input device.

### Background

In order for a user to operate an electronic device (e.g. a computer, including for example a desktop or laptop computer, television set, games console etc.), the user's intentions regarding control commands must be communicated to the electronic device. This is typically achieved using one or more control devices such as a computer mouse, keyboard, or remote control. Different types of control device are better suited to different tasks.

WO2012075468A1 discloses a user interface device including a floating actuator sub-assembly and a base assembly flexibly coupled to the floating actuator assembly. The floating actuator assembly may include a magnet array assembly with a plurality of magnets fixed relative to each other. The base assembly may include multi-axis magnetic sensors corresponding to the magnets in the magnet arrays to sense position of motion of the magnets during user displacements and/or deformation of actuator elements of the user interface device.

EP3026927A1 discloses an apparatus which controls the position of a speaker relative to a base station. The speaker is configured to provide an audio output and the base station is configured to provide a control signal to the speaker to control the audio output of the speaker. The speaker and base station are separated vertically. User input is detected which comprises application of a force to the speaker which changes the vertical position of the speaker relative to the base station. A function is enabled to be performed dependent on the detected user input.

US20140207407A1 discloses a near-surface object sensing device, including a printed circuit board, a plurality of magnetic sensors arrayed on the printed circuit board to sense the magnetic field of an external magnetic object and generate a magnetic sensing signal, multiplexer connected to the magnetic sensors for selecting and outputting the magnetic sensing signal, and a microprocessor connected to the multiplexer for receiving the magnetic sensing signal. The microprocessor includes a sampling algorithm module for converting the magnetic sensing signal into a magnetic field distribution image, and a six-dimensional coordinate-calculating module for calculating six-dimensional coordinates of the external magnetic object.

### Summary

According to a first aspect of the invention, there is provided an input device as defined in claim 1.

According to a second aspect of the invention, there is provided a system as defined in claim 13.

According to a third aspect of the invention, there is provided a method as defined in claim 14.

Further aspects of the invention are defined in the dependent claims.

### Brief Description of the Drawings

To assist understanding of the present disclosure and to show how embodiments may be put into effect, reference is made by way of example to the accompanying drawings in which:
Figure 1 shows schematically a side view of an example of an input device comprising a control element movable by a user relative to a control base;
Figure 2 is a schematic perspective illustration showing the control base;
Figure 3 shows schematically an example of a control system in which the input device is used to control an electronic device;
Figures 4a and 4b illustrate example sensor responses; and
Figure 5a and 5b illustrate example control sensor designs.

### Detailed Description

An input device is provided for operating an electronic device, such as a computer, games console, television set, etc. A control element is suspended above a control base using magnetic levitation. Movement of the control element relative to the control base by a user is detected and corresponding control signals sent to the electronic device for operating the electronic device.

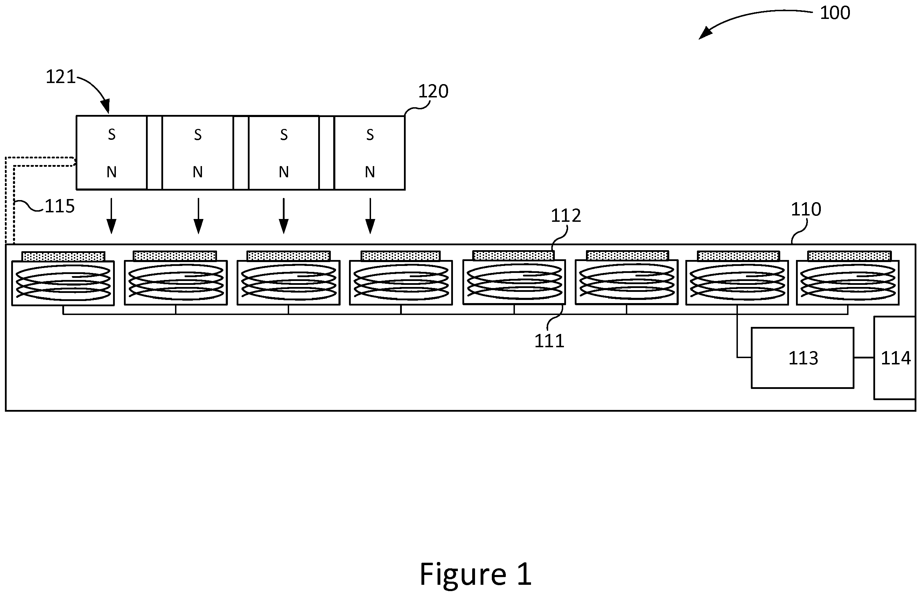

Figure 1 shows schematically a side view of an example input device 100 in accordance with an embodiment of the present invention. The input device 100 comprises a control element 120 and a control base 110. In use, the control base 110 is mounted or supported on some surface, which may be a desk or other worktop surface. In use, the control element 120 is manipulated by a user to move the control element 120 relative to the control base 110.

The control element 120 comprises at least one control element magnet 121 and may comprise plural control element magnets 121. In the example of Figure 1, the control element 120 comprises four control element magnets 121 arranged in a row. The magnetic poles of the four control magnets 121 are aligned and similarly orientated, i.e. the North pole (or South pole) of each magnet 121 is towards the bottom of the control element 120.

The magnets 121 of the control element 120 may be permanent magnets. Alternatively, one or more of the magnets 121 may be an electromagnet, in which case the control element 120 may comprise a power supply such as a (rechargeable) battery (not shown in Figure 1) to power the electromagnet(s).

The control base 110 comprises an array of support magnet 111 and a planar array of sensors 112. The control base 110 comprises plural support magnets 111. The control base 110 comprises plural sensors 112. In this example, the control base 110 also comprises a processing module 113 and an interface 114, though these may be provided as separate components which are in communication with the control base 110. The control base 110 may optionally comprise a control element guide 115, shown by a dashed line in Figure 1, which is described in more detail below. The processing module 113 is operatively coupled to each of the support magnets 111, sensors 112, and interface 114, e.g. via one or more wired or wireless connections.

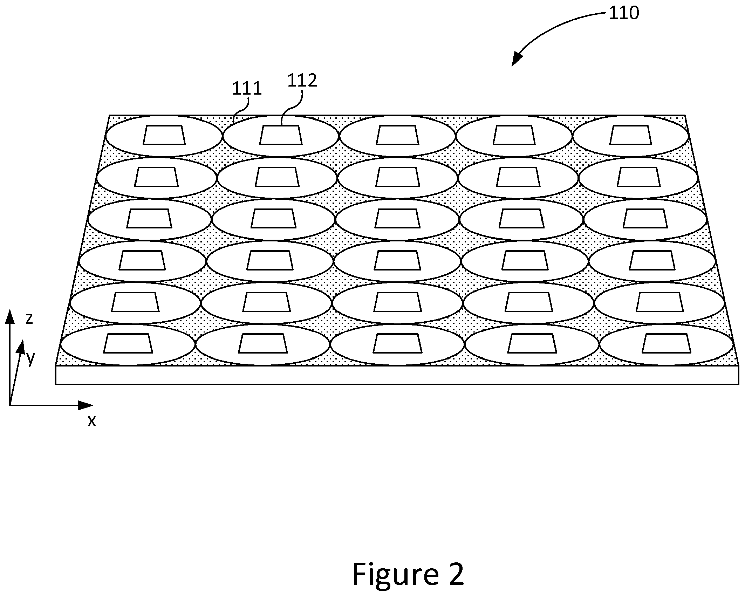

In the example of Figure 1, the control base 110 comprises a plurality of support magnets 111. These may be arranged in for example a row as shown in Figure 1 or a two-dimensional array (see Figure 2). The support magnets 111 are constructed and arranged to support the control element 120 using magnetic levitation. For this purpose, the support magnets 111 may be electromagnets. The strength of their magnetic field may be controllably adjusted for the purposes of supporting the control element 120 in a stable manner.

In any case, the support magnets 111 generate a magnetic field which supports the control element 120 by exerting a force on the one or more control element magnets 121. When the support magnets 111 are electromagnets the magnetic field generated by the support magnets 111 may be varied. This can be achieved by controllably varying a current supplied to the electromagnets accordingly.

The control base 110 has a planar array of sensors 112, which may be co-located with the support magnets 111. Figure 1 shows a plurality of sensors 112 each co-located with a respective support magnet 111. There may be more or fewer sensors 112 than support magnets 111.

Each sensor 112 is a magnetic field sensor arranged to detect a magnetic field strength at that sensor's location. An example of a suitable sensor is a Hall effect sensor (or Hall sensor) which generates an output voltage indicative of the strength of a sensed magnetic field. Different types of Hall effect sensors exist generating either analogue or digital output voltages. Either type may be used with embodiments herein. Another example of a suitable magnetic field sensor is a MEMS-based magnetic field sensor.

The magnitude of the magnetic field sensed by each sensor 112 will include a contribution from the support magnets 111 and a contribution from the control element magnets 120. The contribution from the support magnets 111 can be subtracted from the "raw" sensor data in order to determine the contribution from the control element magnets 120.

Processing module 113 is a logical unit arranged to receive data from the sensors 112 and process the received data to determine at least a relative location of the control element 120. For example, the processing module 113 may determine one of the sensors 112 as detecting the largest magnetic field and therefore determine that the control element 120 is located substantially above that sensor 112. This is described in more detail below. Note also that motion of the control element 120 normal to the sensors 112 (i.e. when the control element 120 is pushed into or pulled out of the plane of the control base 110) can also be determined because the detected field strength will increase/decrease when the control element 120 is moved towards/away from the control base 110 and sensors 112. If the magnetic field of the control element 120 is known to the processor 113, then the processor 113 may also determine (an estimate of) the absolute distance of the control element 120 from the sensors 112.

When one or more of the support magnets 111 are electromagnets, the processing module 113 may also be arranged to control the magnetic field generated by each support magnet 113 by controlling a respective electrical current supplied to each support magnet 113. Hence, the control element 120 is supported under a dynamic (driven) stability.

The interface 114 comprises at least an output for transmitting data to an external device, e.g. via a wired connection. An alternative is for the data to be transmitted wirelessly, e.g. via Bluetooth, Zigbee, IR communication, etc., in which case the interface 114 comprises the appropriate wireless interface hardware (e.g. a Bluetooth or Zigbee interface, to continue the example).

Figure 2 illustrates a perspective view of the control base 110. In this example, the control base 110 comprises a square or rectangular array of thirty support magnets 111 co-located with an array of thirty sensors 112. Each support magnet 111 is thus provided with a respective sensor 112, though it is appreciated, as mentioned above, that this may not be case in other examples. The support magnets 111 and sensors 112 are shown in Figure 2 arranged in a rectangular (five by six) grid. Alternatively, the support magnets 111 may be arranged in a different regular (e.g. hexagonal lattice) or irregular pattern. Similarly, the sensors 112 may be arranged in a different regular or irregular pattern which may be different from the arrangement of the support magnets 111.

In operation, the processor 113 processes data received from the sensors 112 to determine at least a location of the control element 120. In cases where the control base 110 does not comprise a support for constraining movement of the control element 120, the processor 113 also controls the support magnets 111 to support the control element 120 via magnetic levitation. "Support" here means that the control element 120 is held in place such that when the user (e.g. after moving the control element 120 with his hand) lets go of the control element 120, the control element 120 remains at, or substantially at, the same location in space.

The processor 113 may use the location of the control element 120 (determined from the sensor data) in controlling the support magnets 111. That is, the processor 113 may control the support magnets 111 in dependence on the determined location. For example, to control the field of the support magnets 111 to provide a restoring force acting on the control element 120 to hold it in place.

The determined location (and in some examples also the orientation) of the control element 120 relative to the control base 110 is converted by the processor 113 into one or more control signals. The control signal(s) are then sent, via the interface 114, to an external electronic device. The control signal(s) are indicative of the determined location (and possibly orientation) such that the electronic device can interpret the control signal(s) to determine one or more actions to perform. This may comprise moving a cursor on the screen of the electronic device, for example.

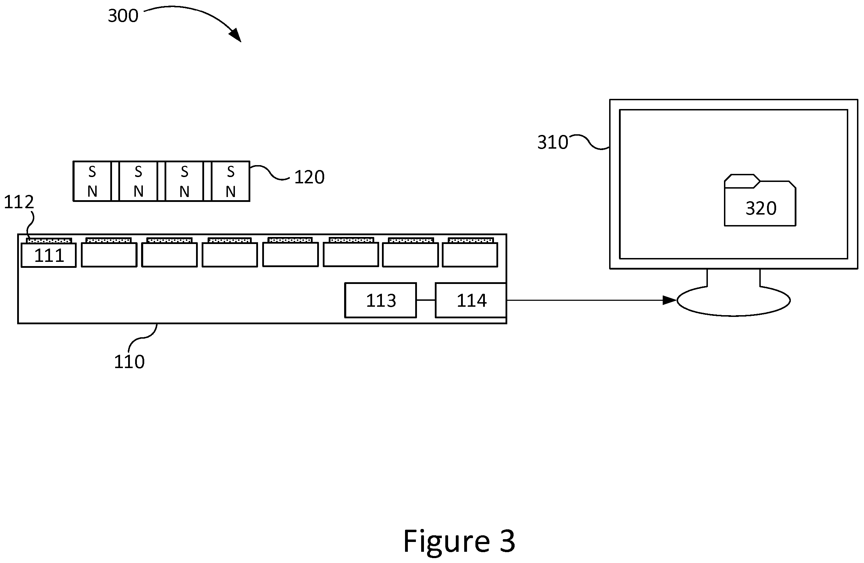

The input device 100 can thus be operated by a user to control an electronic device. An example system 300 is shown in Figure 3 comprising the input device 100 (the control base 110 and control element 120 from Figure 1) and an electronic device 310. The control base 110 is operatively coupled, via the interface 114, to the electronic device 310. That is, the interface 114 is configured to transmit data to the electronic device 310 via the wired or wireless connection mentioned above.

The electronic device 310 is any controllable device which can receive an electronic control signal and react accordingly. Examples of suitable electronic devices include computing devices such as personal (desktop) computers, laptops, games consoles and the like. Further examples include other electronic devices such as television sets, DVD players, etc. In the example of Figure 3, the electronic device 310 is a computer that has a graphical user interface displayed on a screen.

An icon 320 is displayed on the screen of the electronic device 310 as an example of an element which the user may which to control. The user may hold the control element 120 in the hand to select the icon 320, e.g. by moving the control element 120 towards (i.e. closer to) the control base 110, and move the icon 320 around the screen by translating the control element 120 back and forth and sideways across the control base 110. As the control element 120 is moved relative to the control base 110 by the user, the processor 113 dynamically determines the location of the control element 120 by processing the data received from the sensors 112 and sends control signals indicative of the determined location to the electronic device 310. The electronic device 310 then interprets the received control signals to react accordingly (in this case, by selecting and moving the icon 320 on the screen).

In this example, the input device 100 is not limited to motion in a single plane, like a traditional computer mouse, but can move in three dimensions. That is, the control element 120 can be translated by the user in all three dimensions. The control signals generated by the processor 113 may comprise coordinates (e.g. x, y, z) indicative of the determined position of the control element 120.

The processor 113 may also determine a speed at which the control element 120 is moved along each axis from the sensor data. In such cases, the control signals generated by the processor 113 also include a respective value indicating the determined speed along each axis.

Additionally, the control element 120 can be rotated by the user about all three spatial axes. In embodiments, the orientation of the control element 120 about at least one axis is determined by the processor 113. This provides an additional three degrees of freedom.

Each individual value (x-position, y-position, z-position, x-speed, y-speed, z-speed, x-orientation, y-orientation, z-orientation) is an orthogonal component of control provided by the user. These are assignable to different tasks on the electronic device 310. In the above-given example, the x-position and y-position values are assigned to cursor locations on the screen, and the z-position is assigned to a "select" task (i.e. performing similar functionality to clicking on a traditional computer mouse). It is appreciated that only a few examples are given herein and that the user may customize how each component of the control signal is interpreted by the electronic device 310.

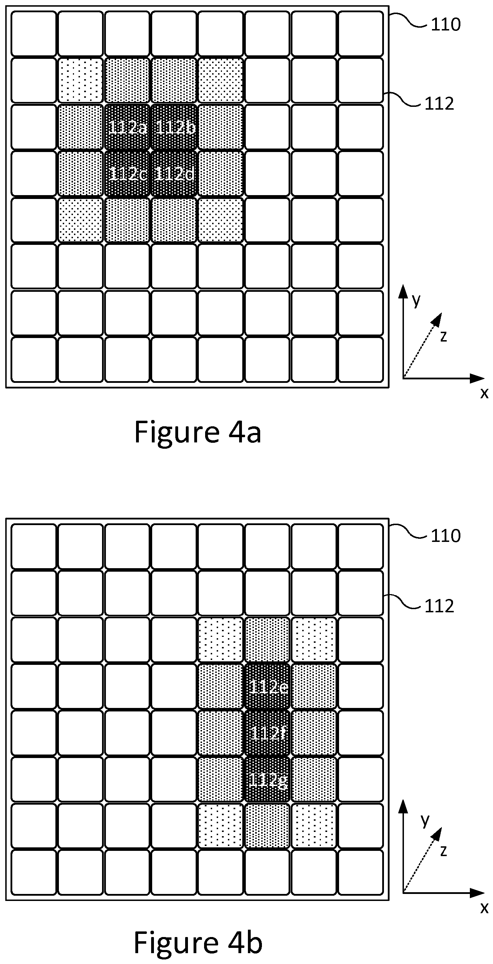

Figures 4a and 4b illustrate a top view of the control base 110 showing only the sensors 112 for the sake of clarity. The response of a given sensor is indicated by the shading of that sensor: darker shading indicates a larger response (i.e. that sensor detecting a greater magnetic field value). In these examples, the sensors 112 are arranged in a square grid in the x-y plane.

In Figure 4a, four sensors 112a-d (in a square) exhibit a high response, the sensors around the outside of these four 112a-d exhibit a lower response, and all other sensors 112 exhibit a negligible or practically zero response. The processor 113 therefore determines from the sensor data that the control element 120 is located above sensors 112a-d, e.g. at a midpoint of the four sensors 112a-d. In this example, the control element 120 may comprise a single control element magnet 121 which is located above sensors 112a-d, or a plurality of control element magnets 121 arranged in a group, e.g. a square.

In Figure 4b, three sensors 112e-g (in a line) detect a high magnetic field strength, the sensors around the outside of these three 112e-g detect lower magnetic field strength, and all other sensors 112 detect a negligible or practically zero magnetic field. The processor 113 determines from the sensor data that the control element 120 is located above sensors 112e-g, e.g. at a midpoint such as above sensor 112f in particular. In this example, the control element 120 comprises a plurality of control element magnets 121 arranged in a row.

It is understood from Figure 3b that the processor 113 can also determine an orientation of the control element 120 in the x-y plane. That is, the sensors 112e-g exhibiting the highest response are in a line parallel to the y-axis and therefore the control element 120 is aligned with the y-axis. The processor 113 can also determine a height of the control element 120 relative to the control base 110 in the z-direction based on the strength of the response of the sensors 112 (at least of sensors 112e-g). Information concerning the height, orientation, and position of the control element 120 is sent to the electronic device 310. Hence, the user is therefore able to manipulate the control element 120 to control the electronic device 310 with an expanded range of control inputs compared to a standard computer mouse.

Regarding orientation, note that the processor 113 can determine an orientation of the control element 120 about any of the three axes, as outlined below.

The processor 113 can determine the orientation of the control element 120 about the z-axis (within the x-y plane) based on the arrangement of the sensors with the highest response. In this case that the control element 120 is aligned with the y-axis as mentioned above.

The processor 113 can determine the orientation of the control element 120 about the x-axis based on the relative strengths of the responses from the sensors 112e-g. That is, the processor 113 can analyse the responses of the sensors 112 along the direction of the control element 120. As the closer a control element magnet 121 is to the control base 110 the larger the response of a sensor 112, the processor 113 is able to determine that the end or side, etc. of the control element 120 at which the sensor readings are higher is closer to the control base 110. Hence, an estimate of the orientation of the control element 120 is determined by the processor 113.

The processor can determine the orientation of the control element 120 about the y-axis because rotating the control element 120 about the y-axis will cause the response of the sensors 112 either side of the control element 120 to differ. That is, responses from sensors 112 on one side will increase and responses from sensors 112 on the other side will decrease.

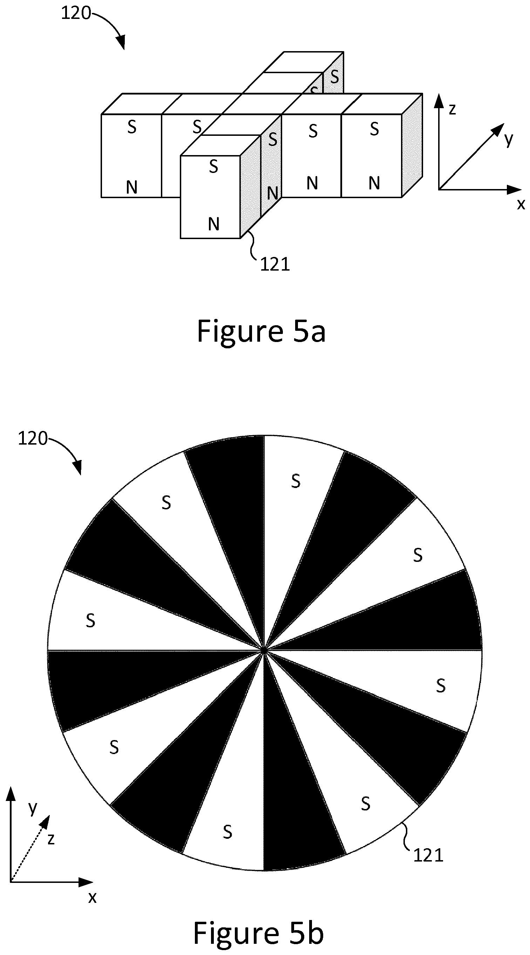

Figures 5a and 5b illustrate some examples of alternative arrangements for the control element 120.

The control element 120 of Figure 5a comprises nine control element magnets 121 arranged in a cross in the x-y plane (a central magnet and four "arms" comprising two magnets each and perpendicularly arranged relative to each other). Each control element magnet 120 is arranged with the North pole on the same face of the control element 120 (the bottom, as shown in Figure 5a).

This arrangement allows the processor 113 to determine orientation about all three axes. The orientation about the z-axis can be determined by the processor 113 by analysing the pattern of responses of the sensors 112 as described above. Similarly, the orientation about the x-axis can be determined by the processor 113 in the manner described above in relation to Figure 4b. Further, this same method can be used by the processor 113 to determine the orientation of the control device 120 on Figure 5a about the y-axis due to the control device 120 extending along the x-axis (whereas the control device 120 in the example of Figure 4b did not).

Figure 5b shows a top view of another example of a control element 120. The control element 120 of Figure 5b comprises eight control element magnets 121 arranged in a circle (in the x-y plane). Each control element magnet 121 in this example is in the form of an equal sized sector of the circle. The control element magnets 121 are arranged so that the same pole (here, the South pole) is outermost.

Given the variety of possible arrangements of control element magnets 121 in the control element 120, each having a possibly distinct magnetic "signature" when detected by the sensors 112, the processor 113 may be configured to determine a type of control element 120 present and to adapt the control signal(s) accordingly. That is, the processor 113 may include an indication of the general type of control element 120 in the control signal(s).

For example, the control signal(s) may distinguish between location and/or orientation data received from the control element 120 of the example in Figures 4a and 4b. The processor 113 may determine from the sensor response in Figure 4a that a symmetric (or point-like) control element 120 is present, and indicate this in the control signal(s) to the electronic device 310. The processor may determine from the sensor response in Figure 4b that a linear (line-like) control element 120 is present, and indicate this in the control signal(s) to the electronic device 310. The type of control element 120 in these examples therefore constitutes an additional control parameter (in addition to position, orientation, and speed along each axis) which can be assigned to different functionality of the electronic device 310. That is, electronic device 310 may be configured to perform different actions in response to the same movement (e.g. rotating clockwise) but performed by different control elements 120.

In another example, the control base 110 comprises a detector connected to the processor 113 for directly detecting the type of control element 120 (instead of inferring it from the sensor response, as above). The detector may be a light sensor such as a camera which is configured to sense a visible property of the control device 120, such as its shape and/or colour, a barcode or QR (Quick Response) code, etc. The processor 113 then determines the control device type from the detected property. In another example, the control element 120 comprises a RFID tag storing an indication of the type of the control element 120. In this case, the detector is an RFID reader arranged to read the RFID tag. The processor 113 is therefore able to determine the type of the control device 120 directly using the indication read from the RFID tag by the detector. Other ways for the control element 120 to identify itself to the control base 110 are possible,

The latter examples allows multiple control devices 120 of the same type (e.g. same shape and design) to control the electronic device 310 differently. Consider a linear control element 120 (i.e. comprising a plurality of control element magnets 121 in a row) which the user may use to draw an image on the screen of the electronic device 310. A plurality of such linear control elements 120 may be distinguished between by the processor 113 and indicated to the electronic device 310. Each control device 120 may therefore be interpreted by the electronic device 310 as a different colour or brush stroke, for example. This allows the user to quickly and intuitively swap between different colours or brush strokes when drawing, by changing between different control devices 120.

In the examples given above, the support magnets 111 of the control base 110 are electromagnets and the processing module 113 is arranged to control a magnetic field generated by the support magnets 111 by controllably varying an electric current supplied to the support magnets 111. However, in other examples some or all of the support magnets 111 of the control base 110 may be permanent magnets. In these examples, the control base 110 may be provided with a control element guide 115 (shown by dashed line in Figure 1) for guiding or restricting motion of the control element 115. The control element guide 115 can be in the form of e.g. a wall or a tether for constraining to movement of the control element 120. In any case, the control element guide 115 is arranged, when present, to restrict the motion of the control element 120 such that the control element 120 is levitated above the control base 110 in a stable manner (i.e. such that the control element 120 remains at a same position relative to the control base 110 when released by the user's hand).

Note that the control element guide 115 only restricts the motion insofar as is required to provide stable levitation when both the control base 110 and control element 120 comprise only permanent magnets (i.e. no electromagnets). The user is still able to move the control element 120 in order to control the electronic device 310, as described above. For example, the control element guide 115 may comprise a tether preventing the control element 120 from turning over. The user is thus still able to move the control element 120 in three dimensions and perform control of the electronic device 310 as described above. In other examples, particularly examples that use only permanent magnets for the control base 110 and the control element 120, the user's hand may provide sufficient stability to the control element 120 whilst the user is moving the control element 120 relative to the control base 110.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

## Claims

1. An input device (100) for generating a control signal for controlling operation of an electronic device (310), the input device (100) comprising:
a control element (120) and a control base (110);
the control element (120) being movable by a user over the control base (110) and comprising at least one control element magnet (121);
the control base (110) comprising: an array of support magnets (111) constructed and arranged to support the control element (120) via magnetic levitation as the control element (120) is moved over the control base (110); and a planar array of sensors (112) constructed and arranged to determine at least one of a location of the control element (120) and a movement of the control element (120) parallel to the planar array of sensors (112) and to generate a corresponding control signal, wherein each of the sensors (112) is a magnetic field sensor.

2. An input device (100) according to claim 1, arranged such that the planar array of sensors (112) detects a three-dimensional location or movement of the control element (120) relative to the planar array of sensors (112).

3. An input device (100) according to claim 1 or claim 2, arranged such that the planar array of sensors (112) additionally detects a relative orientation of the control element (120) relative to the planar array of sensors (112) and generates a corresponding control signal in response to the detected orientation.

4. An input device (100) according to any of claims 1 to 3, arranged such that the planar array of sensors (112) additionally detects a speed of the control element (120) and generates a corresponding control signal in response to the detected speed.

5. An input device (100) according to any of claims 1 to 4, wherein the sensors (112) are Hall effect sensors.

6. An input device (100) according to any of claims 1 to 5, wherein the support magnets (111) are electromagnets.

7. An input device (100) according to any of claims 1 to 5, wherein the support magnets (111) are permanent magnets and the input device (100) comprises a control element guide (115) for restricting movement of the control element (120).

8. An input device (100) according to any of claims 1 to 7, wherein the control element (120) comprises a plurality of control element magnets (121) arranged in a cross.

9. An input device (100) according to any of claim 1 to 8, comprising a detector for determining a type of the control element (120), wherein the control signal is generated based on the determined type of the control element (120).

10. An input device (100) according to claim 9, wherein the detector is configured to determine the type of the control element (120) by analysing data from the sensor (112).

11. An input device (100) according to claim 9, wherein the detector is an RFID reader.

12. An input device (100) according to any of claims 1 to 11, wherein the electronic device (310) is a games console.

13. A system comprising an input device (100) according to any of claims 1 to 12, and the electronic device (310).

14. A method for an input device (100) for generating a control signal for controlling operation of an electronic device (310) by a user moving a control element (120) which comprises at least one control element magnet (121) relative to a control base (110) which comprises an array of support magnets (111) and a planar array of sensors (112), said input device (100) comprising said control element (120) and said control base (110), wherein each of the sensors (112) is a magnetic field sensor, the method comprising:
supporting said control element (120) over the control base (110) via magnetic levitation using the array of support magnets (111) and the control element magnet (121); and
determining, using the planar array of sensors (112), at least one of a location of the control element (120) and a movement of the control element (120) parallel to the planar array of sensors (11); and
generating a corresponding control signal to control the electronic device (310).

15. A method according to claim 14, comprising determining, using the planar array of sensors (112), a three-dimensional location or movement of the control element (120) relative to the planar array of sensors (112).

## Patentansprüche

1. Eingabegerät (100) zum Erzeugen eines Steuersignals zum Steuern des Betriebs eines elektronischen Geräts (310), wobei das Eingabegerät (100) aufweist:
ein Steuerelement (120) und eine Steuerbasis (110);
wobei das Steuerelement (120) von einem Benutzer über der Steuerbasis (110) bewegbar ist und wenigstens einen Steuerelementmagneten (121) aufweist;
wobei die Steuerbasis (110) aufweist: eine Anordnung von Trägermagneten (111), die konstruiert und angeordnet sind, um das Steuerelement (120) per Magnetschwebetechnik zu tragen, wenn das Steuerelement (120) über der Steuerbasis (110) bewegt wird; und eine ebene Anordnung von Sensoren (112), die konstruiert und angeordnet sind, um wenigstens eines einer Position des Steuerelements (120) und einer Bewegung des Steuerelements (120) parallel zur ebenen Anordnung der Sensoren (112) zu bestimmen und ein entsprechendes Steuersignal zu erzeugen, wobei jeder der Sensoren (112) ein Magnetfeldsensor ist.

2. Eingabegerät (100) nach Anspruch 1, das derart eingerichtet ist, dass die ebene Anordnung der Sensoren (112) eine dreidimensionale Position oder Bewegung des Steuerelements (120) relativ zur ebenen Anordnung der Sensoren (112) erfasst.

3. Eingabegerät nach Anspruch 1 oder Anspruch 2, das derart eingerichtet ist, dass die ebene Anordnung der Sensoren (112) zusätzlich eine relative Orientierung des Steuerelements (120) relativ zur ebenen Anordnung der Sensoren (112) erfasst und als Reaktion auf die erfasste Orientierung ein entsprechendes Steuersignal erzeugt.

4. Eingabegerät (100) nach einem der Ansprüche 1 bis 3, das derart eingerichtet ist, dass die ebene Anordnung der Sensoren (112) zusätzlich eine Geschwindigkeit des Steuerelements (120) bestimmt und als Reaktion auf die erfasste Geschwindigkeit ein entsprechendes Steuersignal erzeugt.

5. Eingabegerät (100) nach einem der Ansprüche 1 bis 4, bei welchem die Sensoren (112) Hall-Effekt-Sensor sind.

6. Eingabegerät (100) nach einem der Ansprüche 1 bis 5, bei welchem die Trägermagnete (111) Elektromagnete sind.

7. Eingabegerät (100) nach einem der Ansprüche 1 bis 5, bei welchem die Trägermagnete (111) Permanentmagnete sind und das Eingabegerät (100) einen Steuerelementführer (115) zum Beschränken der Bewegung des Steuerelements (120) aufweist.

8. Eingabegerät (100) nach einem der Ansprüche 1 bis 7, bei welchem das Steuerelement (120) mehrere Steuerelementmagnete (121) in einer Kreuzanordnung aufweist.

9. Eingabegerät (100) nach einem der Ansprüche 1 bis 8, aufweisend einen Detektor zum Bestimmen eines Typs des Steuerelements (120), wobei das Steuersignal basierend auf dem bestimmten Typ des Steuerelements (120) erzeugt wird.

10. Eingabegerät (100) nach Anspruch 9, bei welchem der Detektor ausgestaltet ist, um den Typ des Steuerelements (120) durch Analysieren von Daten vom Sensor (112) zu bestimmen.

11. Eingabegerät (100) nach Anspruch 9, bei welchem der Detektor ein RFID-Reader ist.

12. Eingabegerät (100) nach einem der Ansprüche 1 bis 11, bei welchem das elektronische Gerät (310) eine Spielekonsole ist.

13. System mit einem Eingabegerät (100) nach einem der Ansprüche 1 bis 12 und dem elektronischen Gerät (310).

14. Verfahren für ein Eingabegerät (100) zum Erzeugen eines Steuersignals zum Steuern des Betriebs eines elektronischen Geräts (310) durch einen Benutzer, der ein Steuerelement (120), das wenigstens einen Steuerelementmagneten (121) aufweist, relativ zu einer Steuerbasis (110), die eine Anordnung von Trägermagneten (111) und eine ebene Anordnung von Sensoren (112) aufweist, bewegt, wobei das Eingabegerät (100) das Steuerelement (120) und die Steuerbasis (110) aufweist, wobei jeder der Sensoren (112) ein Magnetfeldsensor ist, wobei das Verfahren aufweist:
Tragen des Steuerelements (120) über der Steuerbasis (110) per Magnetschwebetechnik mittels der Anordnung der Trägermagnete (111) und des Steuerelementmagneten (121); und
Bestimmen wenigstens eines einer Position des Steuerelements (120) und einer Bewegung des Steuerelements (120) parallel zur ebenen Anordnung der Sensoren (112) mittels der ebenen Anordnung der Sensoren (112); und
Erzeugen eines entsprechenden Steuersignals, um das elektronische Gerät (310) zu steuern.

15. Verfahren nach Anspruch 14, aufweisend ein Bestimmen einer dreidimensionalen Position oder Bewegung des Steuerelements (120) relativ zur ebenen Anordnung der Sensoren (112) mittels der ebenen Anordnung der Sensoren (112).

## Revendications

1. Dispositif d'entrée (100) pour générer un signal de commande pour commander le fonctionnement d'un dispositif électronique (310), le dispositif d'entrée (100) comprenant :
un élément de commande (120) et une base de commande (110) ;
l'élément de commande (120) pouvant se déplacer par le biais d'un utilisateur par-dessus la base de commande (110), et comprenant au moins un aimant d'élément de commande (121)
;
la base de commande (110) comprenant : un réseau d'aimants de support (111) qui est construit et agencé pour supporter l'élément de commande (120) par lévitation magnétique lorsque l'élément de commande (120) se déplace par-dessus la base de commande (110) ; et un réseau planaire de capteurs (112) qui est construit et agencé pour déterminer au moins l'un d'un emplacement de l'élément de commande (120) et d'un mouvement de l'élément de commande (120) parallèle au réseau planaire de capteurs (112), et pour générer un signal de commande correspondant, dans lequel chacun des capteurs (112) est un capteur de champ magnétique.

2. Dispositif d'entrée (100) selon la revendication 1, agencé de telle sorte que le réseau planaire de capteurs (112) détecte un emplacement tridimensionnel de l'élément de commande (120) ou un mouvement tridimensionnel de l'élément de commande (120) par rapport au réseau planaire de capteurs (112).

3. Dispositif d'entrée (100) selon la revendication 1 ou 2, agencé de telle sorte que le réseau planaire de capteurs (112) détecte de manière additionnelle une orientation relative de l'élément de commande (120) par rapport au réseau planaire de capteurs (112), et génère un signal de commande correspondant en réponse à l'orientation détectée.

4. Dispositif d'entrée (100) selon l'une quelconque des revendications 1 à 3, agencé de telle sorte que le réseau planaire de capteurs (112) détecte de manière additionnelle une vitesse de l'élément de commande (120), et génère un signal de commande correspondant en réponse à la vitesse détectée.

5. Dispositif d'entrée (100) selon l'une quelconque des revendications 1 à 4, dans lequel les capteurs (112) sont des capteurs à effet Hall.

6. Dispositif d'entrée (100) selon l'une quelconque des revendications 1 à 5, dans lequel les aimants de support (111) sont des électroaimants.

7. Dispositif d'entrée (100) selon l'une quelconque des revendications 1 à 5, dans lequel les aimants de support (111) sont des aimants permanents, et dans lequel le dispositif d'entrée (100) comprend un guide d'élément de commande (115) pour restreindre le mouvement de l'élément de commande (120).

8. Dispositif d'entrée (100) selon l'une quelconque des revendications 1 à 7, dans lequel l'élément de commande (120) comprend une pluralité d'aimants d'élément de commande (121) qui sont disposés en croix.

9. Dispositif d'entrée (100) selon l'une quelconque des revendications 1 à 8, comprenant un détecteur pour déterminer un type de l'élément de commande (120), dans lequel le signal de commande est généré sur la base du type déterminé de l'élément de commande (120).

10. Dispositif d'entrée (100) selon la revendication 9, dans lequel le détecteur est configuré pour déterminer le type de l'élément de commande (120) en analysant des données issues du capteur (112).

11. Dispositif d'entrée (100) selon la revendication 9, dans lequel le détecteur est un lecteur RFID.

12. Dispositif d'entrée (100) selon l'une quelconque des revendications 1 à 11, dans lequel le dispositif électronique (310) est une console de jeux.

13. Système comprenant un dispositif d'entrée (100) selon l'une quelconque des revendications 1 à 12, et le dispositif électronique (310).

14. Procédé pour un dispositif d'entrée (100) visant à générer un signal de commande pour commander le fonctionnement d'un dispositif électronique (310) par le biais d'un utilisateur déplaçant un élément de commande (120), qui comprend au moins un aimant d'élément de commande (121), par rapport à une base de commande (110) qui comprend un réseau d'aimants de support (111) et un réseau planaire de capteurs (112), ledit dispositif d'entrée (100) comprenant ledit élément de commande (120) et ladite base de commande (110), dans lequel chacun des capteurs (112) est un capteur de champ magnétique, le procédé consistant à :
supporter ledit élément de commande (120) par-dessus la base de commande (110) par lévitation magnétique en utilisant le réseau d'aimants de support (111) et l'aimant d'élément de commande (121) ; et
déterminer, en utilisant le réseau planaire de capteurs (112), au moins l'un d'un emplacement de l'élément de commande (120) et d'un mouvement de l'élément de commande (120) parallèle au réseau planaire de capteurs (112) ; et
générer un signal de commande correspondant pour commander le dispositif électronique (310).

15. Procédé selon la revendication 14, consistant à déterminer, en utilisant le réseau planaire de capteurs (112), un emplacement tridimensionnel de l'élément de commande (120) ou un mouvement tridimensionnel de l'élément de commande (120) par rapport au réseau planaire de capteurs (112).
